# EUROPEAN PATENT APPLICATION

(11) **EP 3 263 521 A1**
(43) Date of publication of application: **03.01.2018**
(21) Application number: 16755177.9
(22) Date of filing: 05.02.2016
(51) Int. Cl.: C01B 32/05, B82Y 30/00, H01B 1/00, H01B 1/24, H01B 13/00

(54) **CARBON NANOTUBE DISPERSION AND METHOD FOR MANUFACTURING CONDUCTIVE FILM**

(30) Priority: 25.02.2015 JP 2015035210; 31.07.2015 JP 2015151960; 15.10.2015 JP 2015203428
(71) Applicant: Toray Industries, Inc., Tokyo 103-8666 (JP)
(72) Inventor: OKAMOTO, Naoyo, Nagoya-shi Aichi 455-8502 (JP); NAKAMURA, Tomohiko, Nagoya-shi Aichi 455-8502 (JP)
(74) Representative: Webster, Jeremy Mark
(86) International application number: PCT/JP2016/053485
(87) International publication number: WO 2016/136428

(57) **Abstract**

A carbon nanotube dispersion liquid containing a carbon nanotube-containing composition, a dispersant with a weight-average molecular weight of 1,000 to 400, 000, a volatile salt, and an aqueous solvent. The present invention provides a carbon nanotube dispersion liquid which can maintain a high dispersion of carbon nanotubes even with a smaller amount of dispersant than conventionally used.

## Description

### Technical Field

The present invention relates to a dispersion liquid including a carbon nanotube-containing composition and a method for producing an electrically conductive film.

### Background Art

Carbon nanotubes are materials considered promising for a range of industrial applications because of various characteristics attributable to their ideal one-dimensional structure, such as good electrical conductivity, thermal conductivity and mechanical strength. Hopes are that controlling the geometry of carbon nanotubes in terms of diameter, number of walls and length will lead to performance improves and an expanded applicability. Generally speaking, carbon nanotubes with fewer walls have higher graphite structures. Since single-walled carbon nanotubes and double-walled carbon nanotubes have high graphite structures, their electrical conductivity, thermal conductivity and other characteristics are also known to be high. Of all multi-walled carbon nanotubes, those with a relatively few two to five walls exhibit characteristics of both a single-walled carbon nanotube and a multi-walled carbon nanotube, so that they are in the spotlight as promising materials for use in various applications.

Examples of an application that takes advantage of the carbon nanotube of an electrical conductivity include cleanroom parts, display parts, and automobile parts. Carbon nanotubes are used in these parts to impart an antistatic property, electrical conductivity, radio wave absorption property, electromagnetic shielding property, near infrared blocking property and so on. As carbon nanotubes have high aspect ratios, even a small amount of them can form an electrically conductive path. Because of this, they have the potential to become electrically conductive materials with outstanding optical transparency and detachment resistance compared to conventional electrically conductive fine particles based on carbon black, etc. An optical-purpose transparent electrically conductive film using carbon nanotubes, for instance, is well-known (patent document 1). To obtain an electrically conductive film with excellent optical transparency using carbon nanotubes, it is necessary to efficiently form an electrically conductive path with a small number of carbon nanotubes by breaking up thick carbon nanotube bundles or cohesive aggregates consisting of several tens of carbon nanotubes and highly dispersing them. Examples of a known method to obtain such an electrically conductive film include the coating of a base with a dispersion liquid created by highly dispersing carbon nanotubes in a solvent. Techniques to highly disperse carbon nanotubes in a solvent include the use of a dispersant (patent documents 1 and 2). To disperse carbon nanotubes as highly as possible, it is particularly advantageous to disperse them in an aqueous solvent using a dispersant having both a hydrophilic group with affinity for water and a hydrophobic group with high affinity for carbon nanotubes (patent document 2).

### Prior Art Documents

### Patent Documents

Patent document 1: Japanese Unexamined Patent Publication (Kokai) No. 2009-012988
Patent document 2: Japanese Unexamined Patent Publication (Kokai) No. 2009-536911

### Summary of the Invention

### Problems to be Solved by the Invention

Many dispersants for carbon nanotubes are basically insulation materials and hence have a low electrical conductivity compared to carbon nanotubes. On that account, when a large amount of dispersant is used in a dispersion liquid which is used to produce an electrically conductive film, it may cause the electrical conductivity of the film to be impeded. In addition, when a dispersant having hydrophilicity groups remains in an electrically conductive film, the moisture absorption and swelling of the dispersant under an environment such as high temperature and high humidity causes the electrical conductivity and the like to change, and may reduce the resistance stability. On that account, the amount of dispersant used needs to be minimized in order to produce electrically conductive films having both a high electrical conductivity and resistance to heat and humidity.

Devised to address the above situation, the present invention aims to provide a carbon nanotube dispersion liquid which allows an electrically conductive molded body made therefrom to exert a high electrical conductivity and resistance to heat and humidity, still maintaining a high dispersion of carbon nanotubes.

### Means of Solving the Problems

As a result of carrying out intensive studies to solve the aforementioned problems, the inventors have found that a dispersion liquid having a high dispersion of a carbon nanotube-containing composition can be obtained even with a small amount of dispersant by having a volatile salt coexist during the dispersion of the composition.

Namely, the present invention relates to a carbon nanotube dispersion liquid which contains a carbon nanotube-containing composition, a dispersant with a weight-average molecular weight of 1,000 to 400,000, a volatile salt, and an aqueous solvent.

The present invention further relates to a method for producing an electrically conductive film, in which method the carbon nanotube dispersion liquid is spread on a base and then dried to thereby remove the volatile salt and aqueous solvent.

### Advantageous Effects of the Invention

Using the carbon nanotube dispersion liquid of the present invention allows an electrically conductive molded body having a high electrical conductivity and an excellent resistance to heat and humidity to be obtained.

### Description of Preferred Embodiments

The present invention uses a carbon nanotube-containing composition as an electrically conductive material. For the purpose of the present invention, a carbon nanotube-containing composition means the whole mixture containing a plurality of carbon nanotubes. There are no specific limitations on the mode of existence of carbon nanotubes in a carbon nanotube-containing composition, so that they can exist in a range of states, such as independent, bundled and entangled, or in any combination of those states. A carbon nanotube-containing composition can also contain diverse carbon nanotubes in terms of the number of walls or diameter. Any dispersion liquid, composition containing other ingredients or complex as a composite mixture with other components is deemed to contain a carbon nanotube-containing composition as long as a plurality of carbon nanotubes are contained. A carbon nanotube-containing composition may contain impurities attributable to the carbon nanotube production method (e.g. catalysts and amorphous carbon).

A carbon nanotube has a cylindrical shape formed by rolling a graphite sheet. If rolled once, it is a single-walled carbon nanotube, and if rolled twice, it is a double-walled carbon nanotube. In general, if rolled multiple times, it is a multi-walled carbon nanotube.

According to the usage characteristics required, the carbon nanotube-containing composition may employ any of a single-walled, double-walled, and multi-walled carbon nanotube. If carbon nanotubes with fewer walls (e.g. single to quintuple-walled) are used, an electrically conductive molded body with higher electrical conductivity as well as high optical transparency can be obtained. Using carbon nanotubes with two or more walls makes it possible to obtain an electrically conductive molded body with low light wavelength dependence in terms of optical characteristics. To obtain an electrically conductive molded body with high optical transparency, it is preferable that at least 50 single to quintuple-walled carbon nanotubes, more preferably at least 50 double to quintuple-walled carbon nanotubes, be contained in every 100 carbon nanotubes. It is particularly preferable that at least 50 double-walled carbon nanotubes be present in every 100 carbon nanotubes as it gives rise to very high electrical conductivity and dispersibility. Multi-walled carbon nanotubes with six or more walls have a low degree of crystallinity and low electrical conductivity, as well as large diameter, so that the transparent conductivity of an electrically conductive molded body becomes low due to a smaller number of contacts per unit quantity of carbon nanotubes in the electrically conductive layer.

The number of walls of carbon nanotubes may, for instance, be measured by preparing a sample as follows. When the carbon nanotube-containing composition is dispersed in a medium and if the medium is aqueous, the dispersion liquid is diluted with water added to the composition to bring the concentration of the composition to a suitable level in terms of the visual observability of carbon nanotubes, and several µL of it is dropped onto a collodion film and air-dried. After that, the carbon nanotube-containing composition on the collodion film is observed using a direct transmission electron microscope. When the medium is a nonaqueous solvent, the solvent is once removed by drying, whereafter the residue is dispersed again in water, and observed with a transmission electron microscope in the same manner as described above. The number of carbon nanotube walls in an electrically conductive molded body can be examined by embedding the electrically conductive molded body in an epoxy resin, then slicing the embedded body to a thickness of 0.1 µm or less using a microtome and the like, and observing the slices using a transmission electron microscope. The carbon nanotube-containing composition may also be extracted from an electrically conductive molded body using a solvent and observed using a transmission electron microscope in a similar manner to a carbon nanotube-containing composition. The concentration of the carbon nanotube-containing composition in a dispersion liquid to be dropped onto a collodion film may be any value, as long as each carbon nanotube can be individually observed. A typical example is 0.001 wt%.

The measurement of the number of walls of carbon nanotubes as described above may, for instance, be performed in the following manner:
Using a transmission electron microscope, an observation is conducted at a magnification ratio of 400,000×. From various 75 nm-square areas as observed in the field of view, one covered by carbon nanotubes by at least 10% is randomly chosen, and the number of walls is measured for 100 carbon nanotubes randomly sampled from the area. If 100 carbon nanotubes cannot be measured in a single field-of-view area, carbon nanotubes are sampled from two or more areas until the number reaches 100. In this regard, a carbon nanotube is counted as one as long as part of it is seen in the field-of-view area, and it is not an absolute requirement that both ends be visible. If seemingly two carbon nanotubes according to their appearance in one field-of-view area may possibly be connected outside the area, they are counted as two.

Though there are no specific limitations on the diameters of carbon nanotubes, the diameters of carbon nanotubes having a wall or walls that fall within the preferable number range as specified above range from 1 nm to 10 nm, with those lying within the 1 to 3 nm diameter range particularly advantageously used.

Carbon nanotubes may be modified by a functional group or alkyl group on the surface or at terminals. For instance, carbon nanotubes may be heated in an acid to have functional groups such as a carboxyl group and hydroxyl group incorporated thereby. Carbon nanotubes may also be doped with an alkali metal or halogen. Doping carbon nanotubes is preferable as it improves their electrical conductivity.

If carbon nanotubes are too short, an electrically conductive path cannot be efficiently formed, so that their average length is preferably 0.5 µm or more. If, on the other hand, carbon nanotubes are too long, dispersibility tends to be small, so that their average length is preferably 10 µm or less.

As described later, the average length of carbon nanotubes in a dispersion liquid may be studied using an atomic force microscope (AFM). When a carbon nanotube-containing composition is measured, several µL thereof is dropped onto a mica base, air-dried, and then observed with an atomic force microscope, during which a photograph of one 30 µm-square field-of-view area which contains at least 10 carbon nanotubes is taken, and then the length of each carbon nanotube randomly sampled from the area is measured along the lengthwise direction. If 100 carbon nanotubes cannot be measured in a single field-of-view area, carbon nanotubes are sampled from a plurality of areas until the number reaches 100. Measuring the lengths of a total 100 carbon nanotubes makes it possible to determine the length distribution of carbon nanotubes.

It is preferable that carbon nanotubes whose length is in the range of 0.5 µm or less be present at a rate of 30 or less per every 100 carbon nanotubes, as it makes it possible to reduce contact resistance and improve light transmittance. It is also preferable that carbon nanotubes whose length is in the range of 1 µm or less be present at a rate of 30 or less per every 100 carbon nanotubes. It is also preferable that carbon nanotubes whose length is in the range of 10 µm or more be present at a rate of 30 or less per every 100 carbon nanotubes, as it makes it possible to improve dispersibility.

To obtain an electrically conductive molded body with excellent transparent conductivity, it is preferable to use high-quality carbon nanotubes with high degrees of crystallinity. Carbon nanotubes with high degrees of crystallinity do exhibit excellent electrical conductivity. However, such high-quality carbon nanotubes form more cohesive bundles and aggregates compared to carbon nanotubes with low degrees of crystallinity, so that it is very difficult to highly disperse them on a stable basis by breaking them up into individual carbon nanotubes. For this reason, when obtaining an electrically conductive molded body with excellent electrical conductivity using carbon nanotubes with high degrees of crystallinity, the carbon nanotube dispersion technique plays a very important role.

Though there are no specific limitations on the type of carbon nanotubes, it is preferable that they be linear carbon nanotubes with high degrees of crystallinity because of their high electrical conductivity. Carbon nanotubes with good linearity are carbon nanotubes that contain few defects. The degree of crystallinity of a carbon nanotube can be evaluated using a Raman spectroscopic analysis. Of various laser wavelengths available for a Raman spectroscopic analysis, 532 nm is used here. The Raman shift observed near 1590 cm⁻¹ on the Raman spectrum is called the "G band", attributed to graphite, while the Raman shift observed near 1350 cm⁻¹ is called the "D band", attributed to defects in amorphous carbon or graphite. This means that the higher the G/D ratio, the ratio of the peak height of the G band to the peak height of the D band, the higher the linearity, the degree of crystallinity and hence of the quality of the carbon nanotube.

The higher the G/D ratio is, the better it is, but a carbon nanotube-containing composition is deemed high quality as long as this ratio is 30 or more. It is preferably 40 or more, more preferably 50 or more. Though there is no specific upper limit, the common range is 200 or less. When applied to solids, Raman spectroscopic analysis sometimes exhibits a scattering of measurements depending on sampling. For this reason, at least three different positions are subjected to a Raman spectroscopy analysis, and the arithmetic mean is taken.

A carbon nanotube-containing composition is produced, for instance, in the manner described below.

A powdery catalyst of iron-supported magnesium is placed in a vertical reaction vessel in such a manner as to cover a whole horizontal cross section of the reaction vessel. Methane is circulated in the reaction vessel in the vertical direction, and the methane and the catalyst are brought into contact at 500 to 1,200°C to obtain a reaction product containing carbon nanotubes. Further by an oxidation treatment of the product, a carbon nanotube-containing composition containing single-walled to quintuple-walled carbon nanotubes can be obtained.

Examples of oxidation treatments include the treatment of the pre-oxidation treatment product with an oxidant selected from nitric acid, hydrogen peroxide, or a mixed acid. Examples of treatment with nitric acid include mixing the pre-oxidation treatment product into, for instance, commercially available nitric acid (40 to 80 wt%) to a concentration of 0.001 wt% to 10 wt% followed by reaction at a temperature of 60 to 150°C for 0.5 to 50 hours. Examples of treatment with hydrogen peroxide include mixing the pre-oxidation treatment product into, for instance, a commercially available 34.5% hydrogen peroxide solution to a concentration of 0.001 wt% to 10 wt% followed by reaction at a temperature of 0 to 100°C for 0.5 to 50 hours. Examples of treatment with a mixed acid include mixing the pre-oxidation treatment product into, for instance, a mixed solution of a concentrated sulfuric acid (98 wt%)/a concentrated nitric acid (40 to 80 wt%) (= 3/1) to a concentration of 0.001 wt% to 10 wt% followed by reaction at a temperature of 0 to 100°C for 0.5 to 50 hours. The mixing ratio of the mixed acid may be set in the 1/10 to 10/1 range in terms of the concentrated sulfuric acid/concentrated nitric acid according to the amount of single-walled carbon nanotubes in the product.

Providing such an oxidation treatment makes it possible to selectively remove impurities, such as amorphous carbon, and single-walled CNTs with low heat resistance from the product and thus to improve the purity of single-walled to quintuple-walled carbon nanotubes, particularly double-walled to quintuple-walled ones. At the same time, the dispersibility of carbon nanotubes improves as their affinity for the dispersion medium and additives improves as a result of the functionalization of their surface. Of such oxidation treatments, treatment with nitric acid is particularly preferable.

The oxidation treatment of carbon nanotubes can also be carried out by, for instance, a method of calcination treatment. The calcination treatment temperature can usually be selected in the range of 300 to 10,000°C but is not particularly limited thereto. Because the oxidation temperature relies on a blanketing gas, calcination treatment is preferably carried out at a relatively low temperature when the oxygen concentration is high and at a relatively high temperature when the oxygen concentration is low. Examples of calcination treatment include a method of carrying out calcination treatment in the range of the flammability peak temperature of carbon nanotubes ± 50°C, more preferably in the range of the flammability peak temperature of carbon nanotubes ± 15°C, under the atmosphere. It is preferable to select a low temperature range when the oxygen concentration is higher than that of the atmosphere and a higher temperature range than this when the oxygen concentration is low.

Such oxidation treatment may be carried out immediately after synthesizing carbon nanotubes or may be carried out after separate purification treatment. For instance, when iron/magnesia is used as a catalyst, oxidation treatment may be carried out after purification treatment for catalyst removal is first carried out with an acid such as hydrochloric acid, or purification treatment for catalyst removal may be carried out after oxidation treatment.

The carbon nanotube dispersion liquid of the present invention is characterized by having highly dispersed carbon nanotubes although the dispersant is used in a relatively small amount. As a result of intensive studies on carbon nanotube dispersion liquids, the applicants have found that dispersing a coexisting volatile salt in addition to a dispersant can reduce the usage amount of the dispersant without lowering the dispersibility of the carbon nanotube. The applicants have also found that, because of the aforementioned, an electrically conductive molded body produced using the carbon nanotube dispersion liquid is made less susceptible to humidity, and hence that the resistance to heat and humidity of the electrically conductive molded body is enhanced.

In the present invention, a volatile salt is a compound in which an acid-derived negative ion and a base-derived positive ion are bonded and a compound which is thermally decomposed and volatilized by heating at about 100 to 150°C. Specific examples include, as preferable examples, ammonium salts such as ammonium carbonate, ammonium hydrogencarbonate, ammonium carbamate, ammonium nitrate, ammonium acetate, and ammonium formate. In the present invention, in particular, ammonium carbonate is preferable. Ammonium carbonate exhibits alkalinity in an aqueous solution and hence more easily enhances the dispersibility of carbon nanotubes in the carbon nanotube dispersion liquid. In addition, because the decomposition temperature is about 58°C, ammonium carbonate is more easily decomposed and removed in producing an electrically conductive molded body using the carbon nanotube dispersion liquid.

The amount of volatile salt added is preferably from 50 parts by weight to 2, 500 parts by weight relative to 100 parts by weight of the carbon nanotube-containing composition. The amount of volatile salt is more preferably 100 parts by weight or more relative to 100 parts by weight of the carbon nanotube-containing composition. The amount of volatile salt is still more preferably 1,000 parts by weight or less.

The dispersion liquid of a carbon nanotube-containing composition of the present invention uses a polymer-based dispersant. This is because the use of a polymer-based dispersant makes it possible to highly disperse carbon nanotubes in a solution. In this instance, if the molecular weight of the dispersant is too small, bundles of carbon nanotubes cannot sufficiently be broken up as the interaction between the dispersant and carbon nanotubes is weak. If, on the other hand, the molecular weight of the dispersant is too large, it is difficult for the dispersant to get into the bundles of carbon nanotubes. As a result, the fragmentation of carbon nanotubes progresses before the breaking up of bundles during the dispersion treatment. In the present invention, using a dispersant having a weight-average molecular weight of 1,000 to 400,000 facilitates the dispersant getting into the gaps between carbon nanotubes during dispersion, enhancing the dispersibility of the carbon nanotubes. Moreover, the coagulation of such carbon nanotubes is suppressed when they are applied to a base to coat it, so that the electrical conductivity and transparency the obtained electrically conductive molded body become mutually compatible. From the viewpoint of achieving good dispersibility with only a small amount of dispersant, the weight-average molecular weight of the dispersant is more preferably in the range of 5, 000 to 60, 000. In this regard, "weight-average molecular weight" refers to weight-average molecular weight determined by gel permeation chromatography, as calibrated using a calibration curve made with polyethylene glycol as a standard sample.

Dispersants with a weight-average molecular weight in the aforementioned range may be obtained through synthesis aimed at bringing the weight-average molecular weight into this range or hydrolysis, etc. aimed at turning high molecular weight dispersants into low molecular weight ones. When the dispersant is a carboxymethyl cellulose, it is preferable that a carboxymethyl cellulose having a weight-average molecular weight of more than 60,000 and not more than 500,000 be hydrolyzed at 100°C or more and then dialyzed through a dialysis membrane. When a carboxymethyl cellulose is used as a dispersant, one having a degree of etherification of 0.4 to 1 is preferably used.

By type, a dispersant may be selected from a synthetic polymer, natural polymer, and the like. Preferably, the synthetic polymer is a polymer selected from polyacrylic acid, polystyrene sulfonic acid or a derivative thereof. Preferably, the natural polymer is a polymer selected from a group of polysaccharides comprising alginic acid, chondroitin sulfuric acid, hyaluronic acid and cellulose, as well as a derivative thereof. A derivative means an esterification product, etherification product, salt or the like of any polymer specified above. Of these, the use of a polysaccharide is particularly preferable from the viewpoint of dispersibility improvement. Dispersants may be used singly or as a mixture of two or more. Using a dispersant with good dispersibility can improve transparent conductivity by breaking up bundles of carbon nanotubes. In light of the dispersibility, it is preferable that an ionic polymer be used as the dispersant. In particular, one having a sulfonic acid group, carboxylic acid group or other ionic functional group is preferable as it exhibits high dispersibility and electrical conductivity. Preferably, the ionic polymer is a polymer selected from polystyrene sulfonic acid, chondroitin sulfuric acid, hyaluronic acid, carboxymethyl cellulose and a derivative thereof. In particular, a polymer selected from carboxymethyl cellulose, which is a polysaccharide with an ionic functional group, and a derivative thereof is most preferable. As a derivative, a salt is preferable.

It is preferable that the amount of dispersant contained in the carbon nanotube dispersion liquid be greater than the amount adsorbed by carbon nanotubes but not as much as the amount that would impede electrical conductivity. The present invention has found that having a dispersant and a volatile salt coexisting can sufficiently disperse carbon nanotubes even though the amount of the dispersant used is significantly reduced from a conventional level. The reason is unclear but can be considered as follows. It is considered that when a dispersant disperses carbon nanotubes, the dispersant repeats the adsorption onto the surface of the carbon nanotubes and the desorption into a solvent. On that account, in order to produce a dispersion liquid having sufficiently dispersed carbon nanotubes, an amount of dispersant for maintaining equilibrium in a solvent is required in addition to the amount of the dispersant adsorbed by the carbon nanotubes. However, adding a small amount of volatile salt causes electrostatic shielding to suppress repulsion between dispersants adsorbed on the surface of carbon nanotubes, hence facilitating the adsorption of the dispersant onto the surface of the carbon nanotubes. It is considered that, because of the aforementioned, the equilibrium between the adsorption and desorption of the dispersant shifts toward the adsorption of the dispersant on to the surface of the carbon nanotube, and reduces the amount of dispersant required for the whole dispersion liquid.

Specifically, the content of dispersant contained in the carbon nanotube dispersion liquid is preferably 10 parts by weight to 500 parts by weight of the dispersant relative to 100 parts by weight of the carbon nanotube-containing composition. The content of dispersant is more preferably 30 parts by weight or more relative to 100 parts by weight of the carbon nanotube-containing composition. In addition, the content is more preferably 200 parts by weight or less. When the content of dispersant is less than 10 parts by weight, the bundles of carbon nanotubes are not sufficiently broken up, so that the dispersibility tends to be lower. When the content is more than 500 parts by weight, the excessive dispersant impedes the electrically conductive path and worsens the electrical conductivity, and when hydrophilic functional groups are present in the dispersant, a change in electrical conductivity tends to occur because of the moisture absorption of the dispersant or other reasons against an environmental change such as in high temperature and high humidity.

Under the present invention, a carbon nanotube dispersion liquid is prepared from a carbon nanotube-containing composition, dispersant, volatile salt, and aqueous solvent. The dispersion liquid may be liquid or semisolid (e. g. as a paste or gel) though liquid is preferable. It is preferable that the dispersion liquid be free from precipitates or aggregates during a visual inspection, and remains so even after being left to stand for at least 24 hours. In addition, the content of the carbon nanotube-containing composition is preferably 0.01 wt% to 20 wt% relative to the whole dispersion liquid. The content is more preferably 0.05 wt% or more. In addition, the content is still more preferably 10 wt% or less. If the content of the carbon nanotube-containing composition is lower than 0.01 mass%, energy transfer to the carbon nanotube-containing composition becomes large during dispersion and this promotes the fragmentation of carbon nanotubes. If, on the other hand, the content is higher than 20 mass%, energy is not sufficiently transferred to the carbon nanotube-containing composition during dispersion, and this makes the dispersion difficult.

The aqueous solvent is water or an organic solvent that mixes with water. Any such solvent may be used as long as it is capable of dissolving a dispersant and dispersing carbon nanotubes. Examples of an organic solvent that mixes with water include an ether (e.g. dioxane, tetrahydrofuran or methyl cellosolve), an ether alcohol (e.g. ethoxyethanol or methoxy ethoxy ethanol), an alcohol (e.g. ethanol, isopropanol, phenol), a low carboxylic acid (e.g. acetic acid), an amine (e.g. triethyl amine or trimethanol amine), a nitrogen-containing polar solvent (e.g. N, N-dimethyl formamide, nitro methane or N-methyl pyrrolidone, acetonitrile), and a sulfur compound (e.g. dimethyl sulfoxide).

Of these, it is particularly preferable that water, alcohol, ether or a solvent that combines them be contained from the viewpoint of the dispersibility of carbon nanotubes. Water is still more preferable.

As a method to prepare a dispersion liquid of a carbon nanotube-containing composition, one in which a carbon nanotube-containing composition, dispersant and solvent are mixed and dispersed using a general mixing and dispersing machine for paint production, e.g., a vibration mill, planetary mill, ball mill, bead mill, sand mill, jet mill, roll mill, homogenizer, ultrasonic homogenizer, high-pressure homogenizer, ultrasonic device, attritor, dissolver, or paint shaker. The use of an ultrasonic homogenizer for dispersion is particularly preferable as it improves the dispersibility of the carbon nanotube-containing composition.

It is concerned that because dispersion takes place with a volatile salt contained, heat evolved during the preparation of the dispersion liquid decomposes and volatilizes the volatile salt. Accordingly, it is preferable that, during the preparation of a dispersion liquid, a temperature which does not decompose nor volatilize a volatile salt be maintained by, for instance, cooling the dispersion liquid sufficiently. The liquid temperature during the preparation of a dispersion liquid is preferably maintained at 50°C or less and more preferably maintained at 30°C or less. It is also preferable to confirm, after the preparation of a dispersion liquid, that a necessary amount of volatile salt is contained without being decomposed nor volatilized. There are no limitations on methods for confirming the amount of volatile salt in a dispersion liquid, and, for example, when the volatile salt is an ammonium salt, the amount of the volatile salt can be quantified by quantifying ammonium ions in a dispersion liquid in accordance with the method described in the 42nd section "Ammonium Ion" of JIS K0102:2013. As the content of volatile salt remaining after the preparation of a dispersion liquid, it is preferred that 90% or more of the amount added during the preparation of the dispersion liquid remain.

Apart from the dispersant and the carbon nanotube-containing composition as described above, a dispersion liquid of a carbon nanotube-containing composition may contain other ingredients, such as a surface active agent, electrically conductive polymer, non-electrically conductive polymer and various other polymer materials to the extent that the advantageous effect of the present invention is not undermined.

Applying the carbon nanotube dispersion liquid of the present invention to a base using a method described below can form an electrically conductive molded body having a base on which an electrically conductive layer containing the carbon nanotube-containing composition is formed.

There are no specific limitations on the shape, size or material of the base, as long as it can be amenable to coating with a carbon nanotube dispersion liquid and allows the resulting electrically conductive layer to stick to it, so that a selection can be made according to the purpose. Specific examples include films, sheets, plates, paper, fibers, and particles. The material of a base may, for instance, be selected from resins of organic materials, such as polyester, polycarbonate, polyamide, acrylic, polyurethane, polymethyl methacrylate, cellulose, triacetyl cellulose and amorphous polyolefin. In the case of inorganic materials, available choices include metals, such as stainless steel, aluminum, iron, gold and silver; glass; carbon-based materials; and the like.

Using a resin film as a base is preferable as it makes it possible to obtain an electrically conductive film with excellent adhesiveness, conformity to tensile deformation, and flexibility. There are no specific limitations on the thickness of a base, so that it can, for instance, be chosen from the approximate range of 1 to 1,000 µm. In a preferred embodiment, the thickness of a base has been set in the approximate range of 5 to 500 µm. In a more preferred embodiment, the thickness of a base has been set in the approximate range of 10 to 200 µm.

If necessary, a base may undergo a corona discharge treatment, ozone treatment, or glow discharge or other surface hydrophilization treatment. It may also be provided with an undercoat layer. It is preferable that the material for the undercoat layer be highly hydrophilic.

A base that has been provided with a hard coat treatment, designed to impart wear resistance, high surface hardness, solvent resistance, pollution resistance, anti-fingerprinting and other characteristics, on the side opposite to the one coated with a carbon nanotube dispersion liquid.

The use of a transparent base is preferable as it makes it possible to obtain an electrically conductive molded body with excellent transparency and electrical conductivity. In this regard, a transparent base exhibits a total light transmittance of 50% or more.

After forming an electrically conductive molded body by coating a base with a carbon nanotube dispersion liquid, it is preferable that a binder material be further used to form an overcoat layer on the electrically conductive layer containing carbon nanotubes. An overcoat layer is effective in dispersing and mobilizing electric charges.

A binder material may be added to the carbon nanotube dispersion liquid and, if necessary, dried or baked (hardened) through heating after the coating of the base. The heating conditions are set according to the binder material used. If the binder is light-curable or radiation-curable, it is cured through irradiation with light or energy rays, rather than heating, after the coating of the base. Available energy rays include electron rays, ultraviolet rays, x-rays, gamma rays and other ionizing radiation rays. The exposure dose is determined according to the binder material used.

There are no specific limitations on the binder material as long as it is suitable for use in an electrical conductivity paint, so that various transparent inorganic polymers and precursors thereof (hereinafter may be referred to as "inorganic polymer-based binders") and organic polymers and precursors thereof (hereinafter may be referred to as "organic polymer-based binders") are all available options.

Examples of an inorganic polymer-based binder include a sol of a metal oxide, such as silica, oxidized tin, aluminum oxide or zirconium oxide, or hydrolysable or pyrolyzable organometallic compound which is a precursor to any such inorganic polymer (e.g. an organic phosphorus compound, organic boron compound, organic silane compound, organic titanium compound, organic zirconium compound, organic lead compound or organic alkaline earth metal compound). Concrete examples of a hydrolysable or pyrolyzable organometallic compound include a metal alkoxide or partial hydrolysate thereof; a low carboxylate, such as a metal salt of acetic acid; or a metal complex, such as acetylacetone.

Calcinating any such inorganic polymer-based binder results in the formation of a transparent inorganic polymer film or matrix based on a metal oxide or composite oxide. An inorganic polymer generally exhibits a glass-like quality with high hardness, excellent abrasion resistance and high transparency.

An organic polymer-based binder can be of any type, such as a thermoplastic polymer, a thermosetting polymer, or a polymer radiation-curable with ultraviolet rays, electron rays, or the like. Examples of a suitable organic binder include a polyolefin (e.g. polyethylene or polypropylene), polyamide (e.g. nylon 6, nylon 11, nylon 66 or nylon 6,10), polyester (e.g. polyethylene terephthalate or polybutylene terephthalate), silicone resin, vinyl resin (e.g. polyvinyl chloride, polyvinylidene chloride, polyacrylonitrile, polyacrylate, polystyrene derivative, polyvinyl acetate or polyvinyl alcohol), polyketone, polyimide, polycarbonate, polysulfone, polyacetal, fluorine resin, phenol resin, urea resin, melamine resin, epoxy resin, polyurethane, cellulose-based polymer, protein (gelatin or casein), chitin, polypeptide, polysaccharides, polynucleotide or other organic polymer or a precursor any such polymer (monomer or oligomer). These are all capable of forming a transparent film or matrix through simple solvent evaporation or through heat curing, light irradiation curing, or radiation irradiation curing.

Of these, preferable organic polymer-based binders are compounds having unsaturated bonds amenable to radical polymerization and curing via radiation, namely, monomers, oligomers and polymers having vinyl or vinylidene groups. Examples of such a monomer include a styrene derivative (e.g. styrene or methyl styrene), acrylic acid or methacrylic acid or a derivative thereof (e.g. an alkyl acrylate, or methacrylate, allyl acrylate or methacrylate), vinyl acetate, acrylonitrile and itaconate. Preferable oligomers and polymers are compounds having double bonds in their backbone chains and compounds having an acryloyl or methacryloyl group at both ends of linear chains. Any radical polymerization-curable binder is capable of forming a film or matrix having high hardness, excellent abrasion resistance and high transparency.

The suitable amount of binder to be used is such that it is sufficient to form an overcoat layer or, in the case of being blended into the dispersion liquid, give suitable viscosity for the coating of the base. Too small an amount makes application difficult, but too large an amount is also undesirable as it impedes electrical conductivity.

There are no specific limitations on the method to coat a base with a carbon nanotube dispersion liquid. Any generally known coating method, such as micro gravure coating, wire bar coating, die coating, spray coating, dip coating, roll coating, spin coating, doctor knife coating, kiss coating, slit coating, slit die coating, gravure coating, blade coating or extrusion coating, as well as screen printing, gravure printing, ink jet printing, or pad printing may be used. Coating may take place as many times as possible and two different coating methods may be combined. Most preferably, the coating method is selected from micro gravure coating, die coating and wire bar coating.

There are no specific limitations on the coating thickness of the carbon nanotube dispersion liquid (wet thickness) as long as the desired electrical conductivity can be obtained, since the suitable thickness depends on, among other things, the concentration of the liquid. Still, it is preferable that the thickness be in the 0.01 µm to 50 µm range. More preferably, it is 0.1 µm to 20 µm.

After the carbon nanotube dispersion liquid is applied to a base, it is dried, thereby removing the volatile salt and the solvent to form an electrically conductive layer. Because the volatile salt contained in a dispersion liquid is decomposed and volatilized in the drying step, an electrically conductive molded body is formed which is a base on which an electrically conductive layer having a three-dimensional network structure including a carbon nanotube-containing composition and a dispersant is fixed. In other words, the present invention uses a volatile salt, thereby making it possible to produce an electrically conductive molded body whose electrically conductive layer has the residual dispersion amount reduced, still maintaining the high dispersion state in the carbon nanotube dispersion liquid. The preferable method to remove the solvent is drying by heating. The drying temperature may be any temperature as long as it is high enough for the removal of the volatile salt and the solvent but not higher than the heat resistant temperature of the base. When the base is a resin-based base, the drying temperature is preferably 50°C to 250°C, more preferably 80°C to 150°C.

Though there are no specific limitations on the preferable thickness of the post-drying electrically conductive layer containing a carbon nanotube-containing composition (dry thickness) as long as the desired electrical conductivity can be obtained, it is preferable that the thickness be in the 0.001 µm to 5 µm range,

An electrically conductive molded body obtained by applying the carbon nanotube dispersion liquid of the present invention has an electrically conductive layer in which carbon nanotubes are sufficiently dispersed and thus exhibits adequate electrical conductivity even with a small amount of carbon nanotubes, hence having excellent transparency if using a transparent base. The total light transmittance of the electrically conductive molded body is preferably at least 50%.

Because the carbon nanotube dispersion liquid of the present invention has carbon nanotubes highly dispersed therein, an electrically conductive molded body obtained by coating the liquid exhibits excellent electrical conductivity with a high transparency maintained. Light transmittance and surface resistance are mutually exclusive because if the coating amount of the carbon nanotube dispersion liquid is decreased to increase light transmittance, surface resistance increases, and if the coating amount is increased to lower the surface resistance, light transmittance decreases. The carbon nanotube dispersion liquid of the present invention makes it possible to obtain an electrically conductive molded body with excellent electrical conductivity and transparency as it is able to decrease the surface resistance of the electrically conductive layer while maintaining the dispersibility of carbon nanotubes. As a result, it is even possible to obtain an electrically conductive molded body with both a surface resistance of 1 to 10,000 Ω/□ and a total light transmittance of 50% or more. It is preferable that the total light transmittance of an electrically conductive molded body be 60% or more, more preferably 70% or more, even more preferably 80% or more and the most preferably 90% or more. The surface resistance of an electrically conductive molded body is more preferably 10 to 1,000 Ω/□.

An electrically conductive molded body obtained by applying a dispersion liquid of carbon nanotubes of the present invention as a coat exhibits high electrical conductivity, so that it can be used as cleanroom parts, such as static dissipative shoes and anti-static plates, and display/automobile parts, such as electromagnetic shielding materials, near-infrared blocking materials, transparent electrodes, touch panels and radio wave absorbing materials. Of these, it particularly exhibits excellent performance as touch panels, mainly required to satisfy smooth surface needs, and display-related transparent electrodes, found in liquid crystal displays, organic electroluminescence displays, electronic paper, and the like.

The present invention is now described in more detail using examples. However, the present invention is not considered limited to such examples.

### Examples

Evaluation methods used in the examples are as follows:

### <Evaluation of carbon nanotube-containing composition>

### [Analysis of flammability peak temperature]

Approx. 1mg of the specimen is set in differential heat analysis equipment (DTG-60, manufactured by Shimadzu Corporation) and heated from room temperature to 900°C at a heating rate of 10°C/min and an air supply rate of 50 ml/min. The flammability peak temperature due to heat accumulation was then read off the DTA curve.

### [Analysis of G/D ratio]

A powder specimen was set in a resonance Raman spectroscope (INF-300, manufactured by Horiba Jobin Yvon S.A.S.), and a measurement was performed using a 532 nm laser. To obtain the G/D ratio, an analysis was conducted for three different locations of the sample, with the arithmetic mean taken of the results.

### [Observation of outside diameter distribution and number-of-walls distribution of carbon nanotubes]

A milligram of a carbon nanotube-containing composition was added to 1 mL of ethanol, and a dispersion treatment was performed for 15 minutes using an ultrasonic bath. A few drops of the dispersed specimen were applied to a grid and dried. Coated with the specimen in this manner, the grid was set in a transmission electron microscope (JEM-2100, manufactured by JEOL Ltd.), and measurements were performed. Observations of carbon nanotubes for outside diameter distribution and number-of-walls distribution were performed at a magnification of 400,000×.

### <Evaluation of carbon nanotube dispersion liquid>

### [Measurement by atomic force microscope of average diameter of carbon nanotube bundles contained in carbon nanotube dispersion liquid]

Thirty microliters of a carbon nanotube dispersion liquid whose carbon nanotube concentration had been adjusted to 0.003 mass% was dropped on a mica substrate, and the substrate was spin-coated for 60 seconds at a rotating speed of 3,000 rpm. After this, the diameters of 100 randomly chosen carbon nanotube bundles were measured using an atomic force microscope (SPM9600M, manufactured by Shimadzu Corporation), and the average diameter of the carbon nanotube bundles was calculated by taking the arithmetic average of the measurements.

### [Quantification of volatile salt contained in carbon nanotube dispersion liquid]

The ammonium ions contained in a carbon nanotube dispersion liquid were quantified in accordance with the method described in the 42nd section of JIS K0102:2013. When the volatile salt is ammonium carbonate, a 2 to 10 µg/ml solution of ammonium carbonate was first prepared as an ammonium ion standard solution, and a calibration curve was made by measuring an absorbance at 630 nm of indophenol generated by carrying out a specified reaction. Then, the carbon nanotube dispersion liquid to be measured was suitably diluted so as to have the ammonium carbonate at about 2 to 10 µg/ml in the liquid, followed by carrying out a specified reaction, and the amount of ammonium carbonate was calculated from the absorbance at 630 nm. When the dispersant used was a dispersant containing ammonium ions, a difference from the absorption derived from the ammonium ions in the dispersant was regarded as an absorption derived from the ammonium carbonate.

### <Evaluation of electrically conductive molded body>

### [Measurement of total light transmittance]

The total light transmittance of an electrically conductive film was measured using a haze meter (NDH4000, manufactured by Nippon Denshoku Industries Co. , Ltd.) in which the electrically conductive film was set.

### [Measurement of surface resistance]

Surface resistance was measured using a Loresta resistance meter (EPMCP-T360, manufactured by Dia Instruments Co., Ltd.) in accordance with the four-probe method as specified in JIS K7194 (adopted in December 1994). In the case of high resistance measurement, a Hiresta resistance meter (UP MCP-HT450, manufactured by Dia Instruments Co., Ltd., 10V, 10 seconds) was used.

### (Reference Example 1) Production of carbon nanotube-containing composition

### (Preparation of catalyst)

Ammonium iron (III) citrate (manufactured by Wako Pure Chemical Industries, Ltd.), 24.6 g, was dissolved in 6.2 kg of ion-exchanged water. After adding 1,000 g of magnesium oxide (MJ-30, Iwatani Chemical Industry Co., Ltd.), the solution was subjected to a vigorous stirring treatment for 60 minutes using an agitator, and the suspension was introduced into a 10 L autoclave. During this step, 0.5kg of ion-exchanged water was used as flushing liquid. While the autoclave was in a sealed state, it was heated to 160°C and held at that temperature for 6 hours. Subsequently, the autoclave was left to stand to cool, a slurry-like clouded substance was taken out of it, with excess moisture removed through suction filtration, and the filtered material was dried by heating in a 120°C drier. Bit by bit, the resulting solid was ground into fine particles in a mortar to retrieve, through a sieve, a catalyst consisting of particles ranging from 10 to 20 mesh in diameter. This particular catalyst was introduced into an electric furnace and heated for 3 hours at 600°C under atmospheric conditions. The bulk density of the obtained catalyst was 0.32g/mL. Meanwhile, the filtrate filtered by the above suction filtration was analyzed using an energy dispersing x-ray analyzer (EDX) but iron was not detected. This confirms that the whole amount of the ammonium iron (III) citrate added was carried by magnesium oxide. According to the EDX analysis results of the catalyst, the iron content of the catalyst was 0.39wt%.

### (Production of carbon nanotube-containing composition)

Carbon nanotube-containing compositions were synthesized using the above catalyst. A 132 g portion of the solid catalyst was weighed out and introduced onto a sintered quartz plate in the central region of a reactor installed in the vertical direction to form a catalyst layer. While heating the catalyst layer to raise the temperature in the reaction tube to 860°C, nitrogen gas was supplied at a rate of 16.5 L/min from the bottom of the reaction vessel towards the top of the reaction vessel so that it passed through the catalyst layer. Subsequently, while continuing the supply of nitrogen gas, methane gas was introduced at 0.78 L/min for 60 minutes so that it passed through the catalyst layer and undergo the reaction. The supply of methane gas was stopped and the quartz reaction tube was cooled to room temperature while supplying nitrogen gas at 16.5 L/min to produce a catalyst-containing carbon nanotube composition. A 129 g portion of this catalyst-containing carbon nanotube composition was put in 2,000 mL of a 4. 8N aqueous solution of hydrochloric acid, followed by stirring for 1 hour to dissolve iron (i.e., the catalyst metal) and MgO (i.e., the carrier thereof). After the resulting black suspension was filtered, the separated material was put again in 400 mL of a 4. 8N aqueous solution of hydrochloric acid to remove MgO, and then taken out by filtration. This procedure was performed three times repeatedly to provide a catalyst-free carbon nanotube composition.

### (Oxidation treatment of carbon nanotubes)

The aforementioned carbon nanotube composition was added to a 300-fold weight of concentrated nitric acid (manufactured by Wako Pure Chemical Industries, Ltd., 1st grade assay 60 to 61%) . Subsequently, it was heated under reflux while stirring in an oil bath at 140°C for 24 hours. After the heating under reflux, the nitric acid solution containing the carbon nanotube-containing composition was diluted twice with ion-exchanged water and suction-filtered. It was rinsed in ion-exchanged water repeatedly until the separated suspension became neutral and the carbon nanotube-containing composition in a water-containing wet state was stored. Observation of this carbon nanotube-containing composition by high resolution transmission electron microscopy showed that the average outside diameter was 1.7 nm. In addition, double-walled carbon nanotubes accounted for 90%. The Raman spectroscopic G/D ratio, measured at a wavelength of 532 nm, was 80 and the flammability peak temperature was 725°C.

### (Reference Example 2)

### [Hydrolysis of carboxymethyl cellulose]

In an eggplant-shaped flask, 500 g of a 10 mass% aqueous solution of sodium carboxymethyl cellulose (Cellogen (registered trademark) 5A, manufactured by Dai-Ichi Kogyo Seiyaku Co., Ltd. (weight-average molecular weight: 80,000, molecular weight distribution (Mw/Mn) : 1.6, degree of etherification: 0.7)) was poured, and the aqueous solution was adjusted to pH2 with 1st grade sulfuric acid (manufactured by Kishida Chemical Co., Ltd.). This container was transferred to an oil bath heated at 120°C and the solution was stirred while heating under reflux for 9 hours for hydrolysis. After leaving the eggplant-shaped flask to cool, a 28% aqueous ammonia solution (manufactured by Kishida Chemical Co., Ltd.) was added to adjust the aqueous solution to pH7, thereby stopping the reaction. The sodium carboxymethyl cellulose after the end of hydrolysis was measured by gel permeation chromatography, and the molecular weight was determined relative to a calibration curve made with polyethylene glycol as a standard sample. Results showed that the weight-average molecular weight was about 35,000 and the molecular weight distribution (Mw/Mn) was 1.5. The yield was 97%.

### (Reference Example 3)

### [Forming of base provided with undercoat layer)

By the procedure described below, a base which has, as an undercoat layer, a dispersant-adsorbed layer having fine particles of hydrophilic silica with a diameter of 30 nm exposed at the surface, on a polyethylene terephthalate (PET) film, was formed using polysilicate as a binder.

Mega Aqua Hydrophilic DM Coat (DM-30-26G-N1, manufactured by Ryowa Corporation), which contains fine hydrophilic silica particles of about 30 nm and polysilicate at a solid content of 1 mass%, was used as coating liquid for the formation of a silica film. A wire bar of #4 was used to apply the above coating liquid for the formation of a silica film to a polyethylene terephthalate (PET) film (Lumirror U46, manufactured by Toray Industries, Inc.). After the coating, drying was performed in a drier at 120°C for one minute.

### (Reference Example 4)

### (Formation of overcoat layer)

Into a 100 ml plastic container, 20g of ethanol was put, and 40 g of n-butyl silicate was added and stirred for 30 minutes. After that, 10 g of 0.1N hydrochloric acid aqueous solution was added, stirred for 2 hours, and then allowed to stand at 4°C for 12 hours. The solution was diluted with a liquid mixture of toluene, isopropyl alcohol, and methyl ethyl ketone such that the solid content was 1 wt%. The coating liquid was applied onto the carbon nanotube layer using a wire bar of #8, and then allowed to dry in a drier at 125°C for one minute.

### (Example 1)

Into a 20 ml container, 15 mg (converted to dry weight) of the carbon nanotube-containing composition obtained in Reference Example 1, 150 mg of the 10 mass% sodium carboxymethyl cellulose hydrolysate aqueous solution obtained in Reference Example 2, and 90 mg of ammonium carbonate (manufactured by Wako Pure Chemical Industries, Ltd.) (weight ratio of carbon nanotube/dispersant/ammonium carbonate = 1/1/6) were measured out, and distilled water was added to weigh 10 g. The pH value of this liquid prior to dispersion was 9.2. Then, an ultrasonic homogenizer was used for dispersing the liquid on ice at an output of 20 W for 1.5 minutes to prepare a carbon nanotube dispersion liquid. The liquid temperature of the carbon nanotube dispersion liquid during ultrasonic irradiation was 25°C or less all the time. The resulting liquid was subjected to centrifugal treatment in a high speed centrifugal separation machine operated at 10,000 G for 15 minutes, and then 9 g of the supernatant was taken out to produce 9 g of a carbon nanotube dispersion liquid. After the supernatant was taken out, no precipitate having a size recognizable by visual observation was seen in the residual liquid.

The average diameter of the carbon nanotube bundles contained in this dispersion liquid was measured with AFM, and the average diameter of the carbon nanotube bundle was 1.7 nm. This agreed with the arithmetic outside diameter average of 1.7 nm determined for randomly selected 100 carbon nanotubes by high resolution transmission electron microscopy, suggesting that the carbon nanotubes were in a state of isolated dispersion.

Then, the ammonium carbonate contained in the dispersion liquid was quantified, and 96% of the added ammonium carbonate was found to remain. This has revealed that the ammonium carbonate was hardly decomposed during the dispersion procedure.

### [Application of carbon nanotube dispersion liquid]

The dispersion liquid was adjusted by adding ion-exchanged water thereto so as to have a carbon nanotube concentration of 0.055 mass%, then applied, using a wire bar #7, to a base provided with an undercoat layer obtained in Reference Example 3 such that the total light transmittance was 87 ± 1%, and dried in a drier at 140°C for 1 minute to fix the carbon nanotube-containing composition, to form an electrically conductive layer (hereinafter, a film having the carbon nanotube-containing composition fixed therein is called a carbon nanotube-coated film).

### [Making of terminal electrode]

The carbon nanotube-coated film was made into a sample having a size of 50 mm × 100 mm. Along both the short sides of this sample, silver paste electrode (ECM-100 AF4820, manufactured by Taiyo Ink Mfg. Co., Ltd.) was applied in the range of 5 mm in width × 50 mm in length, and dried at 90°C for 30 minutes, to form a terminal electrode.

### [Resistance change observation]

The film with terminal electrodes obtained as aforementioned was measured using the Card HiTester (3244, manufactured by Hioki E. E. Corporation) for a resistance across terminal electrodes, which was 178 Ω. This value was defined as an initial inter-terminal-electrode resistance R₀. Then, the film was allowed to stand under a 60°C and 90% RH environment for 5 days, and an inter-terminal-electrode resistance R measured after the 5 days was 224 Ω. From the inter-terminal-electrode resistances before and after standing, a resistance change ratio (R - R₀) / R₀ was calculated, and the resistance change ratio was 26%.

### (Example 2)

After a carbon nanotube-coated film was made as in the aforementioned Example 1, an overcoat layer was further made in accordance with Reference Example 4. Then, terminal electrodes were made in the same manner as in Example 1 and allowed to stand under a 60°C and 90% RH environment for 5 days, after which inter-terminal-electrode resistances were measured, resulting in being R₀ = 168 Ω and R = 220 Ω with a resistance change ratio of 31%.

### (Comparative Example 1 and Comparative Example 2)

A carbon nanotube dispersion liquid was made in the same manner as the dispersion liquid of Example 1, except that ammonium carbonate was not added, the sodium carboxymethyl cellulose hydrolysate aqueous solution was at 375 mg, and a 28 mass% ammonia aqueous solution (manufactured by Kishida Chemical Co., Ltd.) was used to adjust the liquid prior to dispersion to pH 9.2. The resulting liquid was subjected to centrifugal treatment in a high speed centrifugal separation machine operated at 10,000 G for 15 minutes, and then 9 g of the supernatant was obtained to produce 9 g of a carbon nanotube dispersion liquid. No precipitate having a size recognizable by visual observation was seen in the liquid remaining after the supernatant was taken out. The average diameter of the carbon nanotube bundles contained in this dispersion liquid was measured with AFM, and the average diameter of the carbon nanotube bundle was 1.7 nm. This agreed with the arithmetic outside diameter average of 1.7 nm determined for randomly selected 100 carbon nanotubes by high resolution transmission electron microscopy and this is considered to indicate a state of isolated dispersion.

Then, using this dispersion liquid, films were made in the same manner as in Example 1 and Example 2 into Comparative Example 1 and Comparative Example 2 respectively. Each film was allowed to stand under a 60°C and 90% RH environment for 5 days, after which inter-terminal-electrode resistances were measured, resulting in being R₀ = 169 Ω and R = 259 Ω with a resistance change ratio of 53% for the film of Comparative Example 1. The film of Comparative Example 2 had R₀ = 185 Ω and R = 270 Ω with a resistance change ratio of 46%.

The aforementioned results have revealed that when ammonium carbonate is not added and the amount of the dispersant is increased instead, the carbon nanotubes are sufficiently dispersed and hence can provide an electrically conductive molded body having a high electrical conductivity but the increase in the amount of the dispersant worsens resistance to heat and humidity.

### (Comparative Example 3)

A carbon nanotube dispersion liquid was made in the same manner as the dispersion liquid of Example 1, except that ammonium carbonate was not added, and a 28 mass% ammonia aqueous solution (manufactured by Kishida Chemical Co., Ltd.) was used to adjust the liquid prior to dispersion to pH 9.2. The resulting liquid was subjected to centrifugal treatment in a high speed centrifugal separation machine operated at 10,000 G for 15 minutes, and precipitates having a size recognizable by visual observation were seen. The average diameter of the carbon nanotube bundles contained in this dispersion liquid was measured with AFM, and the average diameter of the carbon nanotube bundle was 4.4 nm. This was larger than the arithmetic outside diameter average of 1.7 nm determined for randomly selected 100 carbon nanotubes by high resolution transmission electron microscopy, suggesting that the carbon nanotube dispersion liquid in Comparative Example 3 was dispersed in the form of bundles.

Then, using this dispersion liquid, a film was made in the same manner as in Example 1, and the inter-terminal-electrode resistance was measured and found to be R₀ = 396 Ω, which was more than twice higher than the resistance of the film of Example 1.

The aforementioned results have revealed that when the amount of dispersant is small and no volatile salt coexists, the carbon nanotubes are not dispersed sufficiently uniformly and hence is not allowed to provide an electrically conductive molded body having a high electrical conductivity.

### (Example 3 and Comparative Example 4)

Carbon nanotube dispersion liquids for Example 3 and Comparative Example 4 were made in the same manner as in the aforementioned Example 1, except that the species of the volatile salt were ammonium hydrogencarbonate and sodium hydrogencarbonate respectively. The resulting liquid was subjected to centrifugal treatment in a high speed centrifugal separation machine operated at 10,000 G for 15 minutes, and then 9 g of the supernatant was obtained to produce 9 g of a carbon nanotube dispersion liquid. In neither of the Example and the Comparative Example, any precipitate having a size recognizable by visual observation was seen in the liquid remaining after the supernatant was taken out.

Then, the carbon nanotube dispersion liquids of Example 1, Example 3, and Comparative Example 4 were adjusted by adding ion-exchanged water thereto so as to have a carbon nanotube concentration of 0.04 mass%, then applied to bases provided with an undercoat layer obtained in Reference Example 3 such that the total light transmittance was 89%, and dried in a drier at 140°C for 1 minute, to obtain carbon nanotube-coated films. When the surface resistances of these films were measured, those of the films using the dispersion liquids of Examples 1 and 3 in which ammonium carbonate and ammonium hydrogencarbonate, which are volatile salts, were respectively added were found 430 Ω/□ and 480 Ω/□, and in contrast, the film using the dispersion liquid of Comparative Example 4 in which sodium hydrogencarbonate, which is not a volatile salt, was added was found to have a high resistance, 770 Ω/□. This is considered to be because sodium hydrogencarbonate is not volatile, hence remaining in the film and worsening the electrical conductivity.

The aforementioned results have revealed that when no volatile salt is used, an electrically conductive molded body having a high electrical conductivity cannot be obtained.

### (Example 4 and Example 5)

A carbon nanotube dispersion liquid of Example 4 was made in the same manner as in the aforementioned Example 1, except that the amount of ammonium carbonate added was 15 mg. Example 5 was carried out in the same manner as Example 4, except that cooling on ice was not carried out in preparing a dispersion liquid. In Example 4, the liquid temperature of the carbon nanotube dispersion liquid during ultrasonic irradiation was 25°C or less all the time, but in Example 5, the liquid temperature of the carbon nanotube dispersion liquid during ultrasonic irradiation rose up to 61°C at the maximum. The resulting liquids were subjected to centrifugal treatment in a high speed centrifugal separation machine operated at 10,000 G for 15 minutes, and no precipitate having a size recognizable by visual observation was seen in the dispersion liquid of Example 4, but in the dispersion liquid of Example 5, precipitates having a size recognizable by visual observation were seen. In addition, when the ammonium ions contained in the dispersion liquids were quantified, 98% of the added ammonium carbonate remained in the dispersion liquid of Example 4, but only 45% of the added ammonium carbonate remained in the dispersion liquid of Example 5.

Then, the carbon nanotube dispersion liquids of Example 4 and Example 5 were adjusted by adding ion-exchanged water thereto so as to have a carbon nanotube concentration of 0.04 mass%, then applied to bases provided with an undercoat layer obtained in Reference Example 3 such that the total light transmittance was 89%, and dried in a drier at 140°C for 1 minute, to obtain a carbon nanotube-coated film. When the surface resistances of these films were measured, that of the film using the dispersion liquid of Example 4 which was cooled on ice during dispersion was found 440 Ω/□, and in contrast, the film using the dispersion liquid of Example 5 which was not cooled on ice during dispersion was found to have a somewhat high resistance, 630 Ω/□. It is considered that in Example 5, the ammonium carbonate was decomposed and volatilized by heat evolved during ultrasonic irradiation, thereby lowering electrical conductivity.

### Industrial Applicability

Using the carbon nanotube dispersion liquid of the present invention allows a transparent electrically conductive film having a high electrical conductivity and an excellent resistance to heat and humidity to be obtained. The resulting transparent electrically conductive films can favorably be used as touch panels, which are required to satisfy smooth surface needs, and display-related transparent electrodes, which are found in liquid crystal displays, organic electroluminescence displays, electronic paper, and the like.

## Claims

1. A carbon nanotube dispersion liquid comprising a carbon nanotube-containing composition, a dispersant with a weight-average molecular weight of 1,000 to 400, 000, a volatile salt, and an aqueous solvent.

2. The carbon nanotube dispersion liquid according to Claim 1, wherein a content of the volatile salt is from 50 parts by weight to 2,500 parts by weight relative to 100 parts by weight of the carbon nanotube-containing composition.

3. The carbon nanotube dispersion liquid according to Claim 1 or 2, wherein the volatile salt is an ammonium salt.

4. The carbon nanotube dispersion liquid according to any of Claims 1 to 3, wherein a content of the dispersant is from 10 parts by weight to 500 parts by weight relative to 100 parts by weight of the carbon nanotube-containing composition.

5. The carbon nanotube dispersion liquid according to any of Claims 1 to 3, wherein a content of the dispersant is from 30 parts by weight to 200 parts by weight relative to 100 parts by weight of the carbon nanotube-containing composition.

6. The carbon nanotube dispersion liquid according to any of Claims 1 to 5, wherein the dispersant is a polysaccharide.

7. The carbon nanotube dispersion liquid according to Claim 6, wherein the dispersant is a polymer selected from carboxymethyl cellulose and a salt thereof.

8. The carbon nanotube dispersion liquid according to any of Claims 1 to 7, wherein the dispersant has a weight-average molecular weight of 5,000 to 60,000.

9. The carbon nanotube dispersion liquid according to any of Claims 1 to 8, wherein a ratio of double-walled carbon nanotubes to all the carbon nanotubes contained in the carbon nanotube-containing composition is 50 or more per 100 carbon nanotubes.

10. A method for producing an electrically conductive molded body, comprising: coating a base with the carbon nanotube dispersion liquid according to any of Claims 1 to 9; and then drying the liquid to thereby remove the volatile salt and the aqueous solvent.

11. The method for producing an electrically conductive film according to Claim 10, wherein the obtained electrically conductive molded body has a total light transmittance of 70% or more and a surface resistance of 10 to 10,000 Ω/□.
